# EUROPEAN PATENT APPLICATION

(11) **EP 0 705 724 A2**
(43) Date of publication of application: **10.04.1996**
(21) Application number: 95115613.2
(22) Date of filing: 04.10.1995
(51) Int. Cl.: B60G 13/16, B60K 1/04, B62D 61/08

(54) **Motor vehicle with balanced suspensions and increased stability**

(30) Priority: 07.10.1994 IT MI942049; 07.10.1994 IT MI940667 U
(71) Applicant: Z.E.V. S.R.L., I-36071 Arzignano (Vicenza) (IT)
(72) Inventor: Remonato, Fulvio Onorato, I-36054 Montebello (Vicenza) (IT); Frankland, Philip, I-36071 Arzignano (Vicenza) (IT)
(74) Representative: Luksch, Giorgio, Dr.-Ing.

(57) **Abstract**

A motor vehicle of the type comprising a support frame (1) for the various vehicle components and, in particular, for at least one motor (5), the relative transmission members (4), and suspensions (18, 7, 9) for connecting the vehicle wheels (3) to the frame.

The suspensions at least of the vehicle rear wheels each comprise a lever linkage (18), to one end of which there is connected one of the vehicle wheels (3), and to the other end of which there are connected means (5) for at least partially compensating the weight of said wheel, said lever linkage being hinged to the vehicle frame.

## Description

This invention relates to a motor vehicle, in particular an electric vehicle, of the type comprising a support frame for the various vehicle components and, in particular, for at least one motor, the relative transmission members, and suspensions for connecting the wheels to the frame.

In the present context the term "suspensions" means the lever linkages or arms connecting the wheels to the frame plus the usual elastic means for damping the vehicle; the term "wheel" means the wheel rim plus the tyre mounted thereon and the braking means.

One of the parameters used to evaluate the comfort of a vehicle, in particular on rough or uneven roads, is for example the ratio of the weight of the vehicle sprung masses, ie those vehicle masses connected elastically together by the vehicle suspensions, to the weight exerted by the vehicle wheels calculated with respect to the frame, ie when the frame is raised from the ground and hence not acting on the wheels, and the suspension damper is not connected to the frame. Generally the greater this ratio, the greater the vehicle comfort.

Consequently in motor vehicles, to improve running comfort it is known to lighten the vehicle wheels as much as possible, for example by using alloy wheel rims and/or special disc brakes, for example of carbon type. This results in a considerable wheel weight reduction. As the wheel lightening components are constructed using special techniques and materials they are of relatively high cost and are hence used on luxury rather than utilitarian vehicles. Moreover, the vehicle suspensions cannot always be easily and quickly fitted to the vehicle frame, resulting in an increase in the vehicle production time and cost.

In addition further problems have been noted in known vehicles of the aforesaid type and in particular in three-wheel electric vehicles for personal transportation of the type comprising a support frame, a central front wheel, two coaxial rear wheels, at least one motor unit with transmission members, and a set of storage batteries for powering the motor.

In such vehicles the motor is generally positioned between the two rear wheels and is connected to these latter by live axles. The set of storage batteries is positioned above the wheels and motor or in the central part of the vehicle.

The vehicle centre of gravity is therefore in a position relatively far from the ground on which the vehicle travels, resulting in frequent stability problems which can even lead to vehicle overturning. This problem is particularly serious in three-wheel vehicles, which are constitutionally unstable compared with four-wheel vehicles. In this respect such vehicles have only three ground support points and a smaller steering radius, while still being able to attain a relatively high speed, for example of the order of 50 km/h. Moreover in known vehicles the set of storage batteries generally cannot be totally removed to be replaced with a new set of storage batteries, but can only be connected to a charger.

Again in known vehicles, the thermal energy developed by the electric motor is generally not recovered at all, electrical resistance heaters being used to heat the vehicle.

An object of the present invention is to provide a vehicle comprising suspensions which provide increased vehicle comfort, in particular on uneven roads.

A further object is to provide suspensions of simple construction, easy assembly and low cost, and hence also usable for utilitarian vehicles, in particular electric vehicles.

A further object of the present invention is to provide a three-wheel electric vehicle which overcomes the aforesaid drawbacks and in particular is able to offer excellent stability and safety, even under extreme operating conditions.

A further object is to provide an electric vehicle in which battery recharging is rapid and simple and in which at least partial recovery of the heat generated by the electric motor can be achieved.

These and further objects which will be apparent to an expert of the art are attained by a vehicle in accordance with the accompanying claims.

The present invention will be more apparent from the accompanying drawings, which are provided by way of non-limiting example and in which:
Figure 1 is a schematic perspective view of a vehicle according to the invention;
Figure 2 is a schematic side view thereof;
Figure 3 is a perspective view of a detail representing the vehicle suspensions and rear wheels;
Figure 4 is a schematic lateral representation of the detail of Figure 3; and
Figure 5 is a schematic view of the vehicle from above.

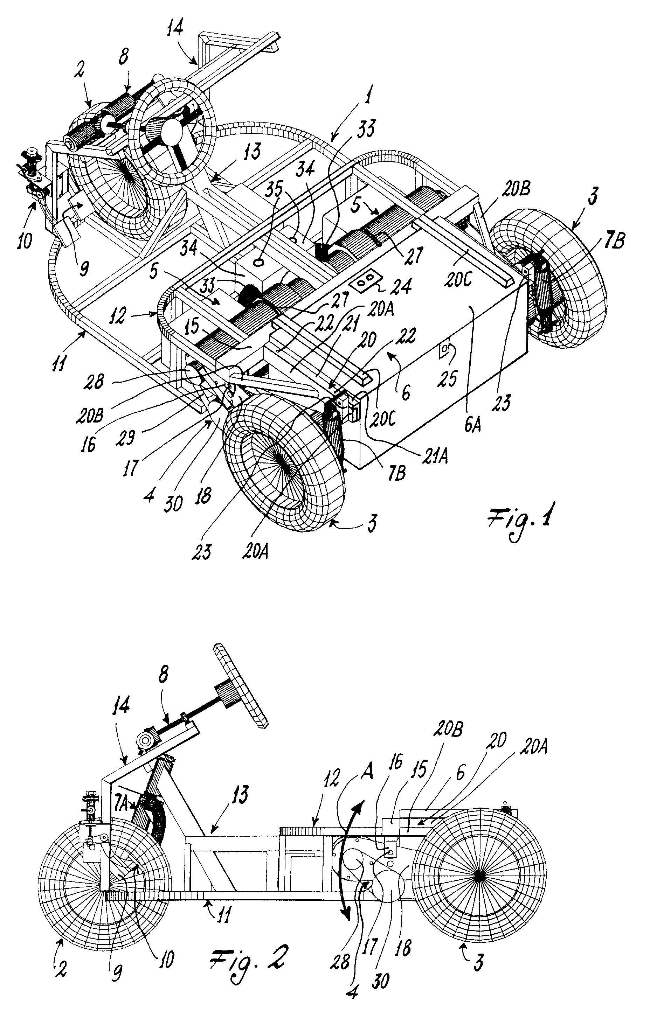

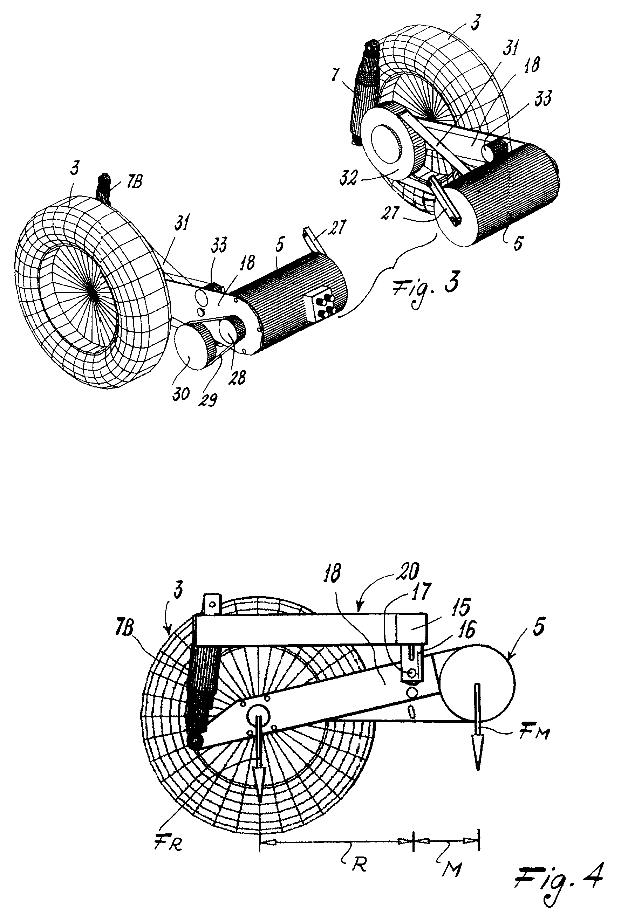

Figures 1 and 2 schematically represent an electric vehicle comprising three wheels 2, 3, which is shown without its passenger compartment (of conventional type). The vehicle comprises a usual support frame 1 for a central wheel 2 and two rear wheels 3, each connected via a belt transmission 4 to an electric motor 5.

The vehicle also comprises a support element or container 6 for rechargeable batteries (not shown but conventional) for powering the motors, usual damping members 7A, 7B for the wheels 2, 3 respectively, a usual steering column 8 connected to the front wheel 2, and usual pedals 9 and 10 respectively for acceleration and for operating the brakes (not shown but conventional) associated with the wheels. The frame 1 is constructed in the usual manner from tubular metal sections and has a structure substantially of traditional type, which consequently will not be described in detail but briefly comprises two mutually parallel superposed flat parts 11, 12 of substantially rectangular shape with those corners closer to the front wheel rounded, a central stiffening part 13 for supporting the front wheel 2 and for connecting said two parts 11 and 12 together, and a further part 14 for supporting the steering column 8 and the pedals 9 and 10. The upper flat part 12 of the frame is closed at its rear by a bar 15 rigidly connected at its centre to the central part 13 of the frame; from each end of said bar there downwardly extends a respective support 16, to each of which there is hinged at 17 a plate or lever 18 to which there are connected one of the two motors 5, the relative belt transmission 4, one of the wheels 3 with its braking members (not shown), and a damper 7B. Specifically, at their hinging point 17, the supports 16 are provided with a seat comprising a bush (not shown but conventional) housing a pin 33 extending from the lever 18.

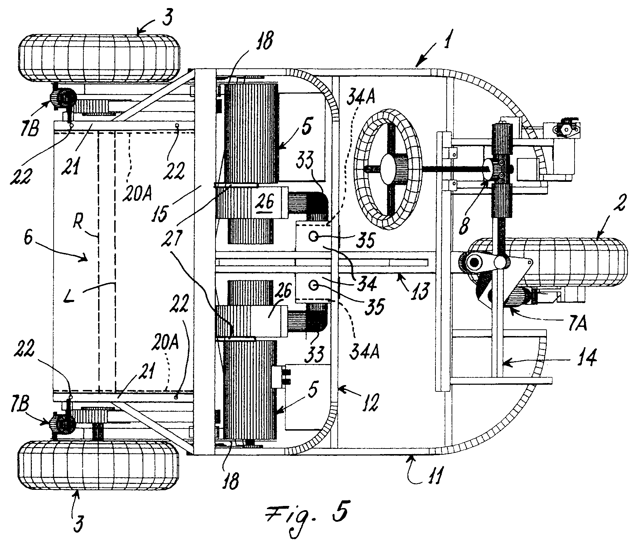

A respective element 20 for supporting the battery container 6 is rigidly connected to each end of the bar 15. Said elements each comprise an L-shaped arm 20A (Figures 1 and 3) on which there rests an L-shaped ledge 21 fixed to the side of the container 6. The arms 20A are further connected to the bar 15 by inclined cross-members 20B. The container 6 is rested by its ledges 21 on the two arms 20A and is then fixed to these latter by pins or screws 22 which engage in holes provided in the arms and ledges. To prevent the container 6 being able to become detached from the arms 20A by accident and overturn towards the vehicle passenger compartment, bars 20C rigidly fixed to the central bar 15 are advantageously provided. The bars 20C are fixed to the central bar 15 at a height such as to enable the container to be raised from the support arms 20A.

In the illustrated example the container 6 is of parallelepiped shape and advantageously comprises at least movable wall (in the illustrated example the upper wall 6A, hinged laterally to the container) so as to facilitate access to the batteries. The container also comprises a conventional socket 24 for connecting a cable (not shown) of a conventional system for controlling and distributing electrical energy to the motors (which is not shown but is conventional) and for recharging the batteries, and a conventional element 25 for fastening the movable wall 6A to the front part of the container.

Supports 23 for the dampers 7B are provided at the free ends of the arms 20A.

The wheels 3 and 2, the steering column 8, the dampers 7A, B and the pedals 9 and 10 are all of traditional type and will therefore not be described in detail. The electric motors 5 are also of conventional type, each comprising a conventional centrifugal cooling fan 26 at their free end. The electric motors 5 are positioned between the front wheel 2 and the rear wheels 3 and are fixed to the plate 18 at that of their ends from which the drive shaft extends, and at their other end, comprising the fan, to a support arm 27 pivoted to the cross-member 15 and to the motor.

On the shaft (not shown) of each electric motor there is keyed a drive pulley 28 about which there engages a first toothed belt 29, which also engages a first idle pulley 3B. This latter is keyed onto an intermediate idle shaft (not shown) which is supported by a belt tensioning element (not shown) hinged to the lever 18 at its inner end. On said idle shaft there is keyed a second pulley (not shown but identical to 30) about which there engages a second belt 31 for transmitting motion to a further pulley 32 connected by a shaft (not shown) to the wheel 3, the shaft passing through an aperture in the lever 18 and being connected to this latter by a usual ball bearing.

At the rear end of the lever 18 there is provided a conventional mounting for the damper 7B. On their inner face the levers 18 comprise a pin 33 to be inserted into the relative seat provided in the support 16 (Figure 1) on the frame.

As shown schematically in Figure 4, the lever 18 is sized so that the motor 5 and the wheel 3 can be positioned respectively at a distance M and at a distance R from the hinging point 17 such that the moments of the respective weight forces FM and FR are substantially in equilibrium, ie such that the moment deriving from the weight of the wheel is slightly greater than or equal to that deriving from the weight of the motor.

In this manner the weight of the vehicle rear wheels is balanced, it being surprisingly found that this considerably increases vehicle comfort, particularly when travelling on uneven or rough roads.

As shown in Figure 2, in a vehicle according to the invention the motors 5 are no longer rigidly fixed to the frame but are able to move through a small angle, indicated by the arrow A in Figure 4, in relation to the stresses to which the rear wheels 3 are subjected. As the transmission members 4 are rigid with the plate 18, the oscillations of the motor 5 have no influence on the transmission.

It should also be noted that the suspension according to the invention facilitates assembly of the vehicle components. In this respect the motor, the relative transmission, the wheels and the damper can be mounted directly on the lever, which is then connected to the frame, independently of whether this latter is already complete or all relative components have been mounted on it.

It should be noted that by virtue of the invention the wheel components can be of traditional type, it therefore not being necessary to use costly components formed from special materials or by special techniques.

The hot air leaving the fans 26 is conveyed through tubes 33 to a chamber 34 comprising internally a conventional purification filter (not shown), for example of the activated carbon type, and a valve (not shown) for directing the air towards a first exit (not shown) communicating with the outside or a second exit 35 communicating with the vehicle passenger compartment (not shown).

It should further be noted that because of the particular position of the electric motors 5, the particular transmission and the structure of the frame 1, the battery container 6 can be positioned between the rear wheels 3. As can be seen from Figure 2, the container is positioned at minimum height from the surface on which the vehicle rests, ie substantially at the same height from the ground as the lower part 11 of the frame 1. The container is advantageously arranged with its longitudinal axis L (Figure 5) forward of the axis R of the rear wheels 3, towards the front wheel 2. This minimizes the height of the vehicle centre of gravity from the ground, so considerably increasing its stability compared with known vehicles.

By virtue of the dimensioning and the particular positioning of the battery container 6, the vehicle has proved extremely stable even when negotiating very narrow bends at high speed.

It must also be noted that, again because of the particular arrangement of the motors 5 and relative transmission members, the battery container 6 can be positioned at the rear end of the vehicle, ie that end of the vehicle most easily accessible, and at a height from the ground which enables it to be easily removed.

In this respect if, in order to save time, it is preferred not to recharge the batteries in the container 6 but to replace them with other charged batteries, it is necessary merely to release the container from the support arms 20A and, by means of a usual trolley brought up to the rear end of the vehicle, slightly raise the container 6 from said arms 20A and replace it.

The aforedescribed embodiment is provided by way of example only, numerous embodiments being possible, all falling within the same inventive concept. For example, the vehicle could be provided with a single motor supported by a transverse bar, the ends of which are connected to the lever 18 at those lever ends to which the motors 5 are connected. In this case, for each wheel 3 the motor would comprise a drive shaft connected for example via usual universal joints to a shaft on which the drive pulley 28 is keyed.

The motor 5 could be replaced by a different vehicle component or by a counterweight able to exert an adequate force for balancing the weight of the vehicle wheels. Finally the vehicle could be of the four-wheel type with a motor other than electric.

In the case of a three-wheel electric vehicle, the vehicle could for example comprise a single electric motor positioned between the container 6 and the front wheel 2 and driving the rear wheels 3 by belts. In this case the motor and the wheels 3 could be connected to the frame in the traditional manner rather than be associated with oscillating plates 18. In addition the container 6 could be fitted to the frame 1 in a manner different from that described, for example by usual lever linkages which further facilitate the replacement of the container with a charged one.

## Claims

1. A motor vehicle of the type comprising a support frame (1) for the various vehicle components and, in particular, for at least one motor (5), the relative transmission members (4), and suspensions (18, 7, 9) for connecting the vehicle wheels (3) to the frame, characterised in that the suspensions at least of the vehicle rear wheels each comprise a lever linkage (18), to one end of which there is connected one of the vehicle wheels (3), and to the other end of which there are connected means (5) for at least partially compensating the weight of said wheel, said lever linkage being hinged to the vehicle frame.

2. A vehicle as claimed in claim 1, characterised in that the hinging point of the lever linkage (18) is located between the connection position of the wheel (3) and the connection position of the compensating means (5).

3. A vehicle as claimed in claim 1, characterised in that the means for at least partially compensating the weight of the wheel are the vehicle motor (5).

4. A vehicle as claimed in claim 1, characterised in that the lever linkage comprises for each of the two vehicle rear wheels (3) a lever (18), to one end of the lever there being connected one of said wheels and to the other end a motor (5) for driving said wheel (3), the lever being hinged to the vehicle frame (1) at a point between said two ends, to the lever there being connected members (4) for transmitting motion from the motor (5) to said wheel (3).

5. A vehicle as claimed in claim 4, characterised in that the motion transmission members (4) comprise a plurality of belts (29, 31) engaging pulleys (28, 30) and connected to the vehicle rear wheels (3).

6. A vehicle as claimed in claim 1, characterised in that a damper (7B) is connected to the lever linkage (18) and is also fixed to the vehicle frame (1).

7. A vehicle as claimed in claim 6, characterised in that the damper (7B) is connected to the lever linkage (18) at that end with which the wheel (3) is associated.

8. A vehicle as claimed in claim 1, characterised in that a lever linkage (18) is associated with each of the two rear wheels of a three-wheel electric motor; the compensating means being two different electric motors (5), each driving one of said two vehicle wheels.

9. A three-wheel electric vehicle of the type comprising a support frame, a central front wheel and two coaxial rear wheels with relative suspensions, at least one motor unit with members for transmitting motion to the rear wheels, and a set of storage batteries for powering the motor, in accordance with claim 1, characterised in that the set of storage batteries is positioned between the two rear wheels (3), the motor unit (5) being positioned between the set of storage batteries and the front wheel (2), and the set of storage batteries being housed in a container (6) removably associated with the vehicle frame (1).

10. A vehicle as claimed in claim 9, characterised by comprising for each of the rear wheels (3) a separate motor unit (5) and separate members for transmitting motion to the rear wheels.

11. A vehicle as claimed in claim 9, characterised in that the battery container (6) is associated with the vehicle frame (1) such that the longitudinal axis (L) of the container lies between that (R) of the rear wheels (3) and the electric motor (5), so as to ensure conditions of maximum stability for the vehicle.

12. A vehicle as claimed in claim 9, characterised in that the set of storage batteries is associated with the frame in a position such as to minimize the height of the vehicle centre of gravity from the ground.

13. A vehicle as claimed in claim 9, characterised in that the support frame (1) comprises at its rear end at least two support elements (21) extending substantially into the space between the two vehicle rear wheels (3), said support elements (21) being arranged to support a container (6) for the vehicle batteries.

14. A vehicle as claimed in claim 9, characterised by comprising means (33, 34) for at least partially recovering the thermal energy generated by the motor unit (5).

15. A vehicle as claimed in claim 14, characterised in that the means for recovering the thermal energy generated by the motor unit (5) are associated with at least one fan (26) for cooling the motor unit and comprise means (34A) for filtering the exit air from said fan and means for directing the fan exit air towards the interior of the vehicle passenger compartment.

16. A vehicle as claimed in claim 9, characterised by comprising bars (20C) for preventing a battery container (6) accidentally overturning towards the vehicle passenger compartment.

17. A three-wheel electric vehicle of the type comprising a support frame, a central front wheel and two coaxial rear wheels with relative suspensions, at least one motor unit with members for transmitting motion to the rear wheels, and a set of storage batteries for powering the motor, characterised in that the set of storage batteries is positioned between the two rear wheels (3), the motor unit (5) being positioned between the set of storage batteries and the front wheel (2), and the set of storage batteries being housed in a container (6) removably associated with the vehicle frame (1).

18. A vehicle as claimed in claim 17, characterised by comprising for each of the rear wheels (3) a separate motor unit (5) and separate members for transmitting motion to the rear wheels.

19. A vehicle as claimed in claim 17, characterised in that the battery container (6) is associated with the vehicle frame (1) such that the longitudinal axis (L) of the container lies between that (R) of the rear wheels (3) and the electric motor (5), so as to ensure conditions of maximum stability for the vehicle.

20. A vehicle as claimed in claim 17, characterised in that the set of storage batteries is associated with the frame in a position such as to minimize the height of the vehicle centre of gravity from the ground.

21. A vehicle as claimed in claim 17, characterised in that the support frame (1) comprises at its rear end at least two support elements (21) extending substantially into the space between the two vehicle rear wheels (3), said support elements (21) being arranged to support a container (6) for the vehicle batteries.

22. A vehicle as claimed in claim 17, characterised by comprising means (33, 34) for at least partially recovering the thermal energy generated by the motor unit (5).

23. A vehicle as claimed in claim 22, characterised in that the means for recovering the thermal energy generated by the motor unit (5) are associated with at least one fan (26) for cooling the motor unit and comprise means (34A) for filtering the exit air from said fan and means for directing the fan exit air towards the interior of the vehicle passenger compartment.

24. A vehicle as claimed in claim 17, characterised by comprising bars (20C) for preventing a battery container (6) from accidentally overturning towards the vehicle passenger compartment.
